# EUROPEAN PATENT APPLICATION

(11) **EP 3 968 534 A1**
(43) Date of publication of application: **16.03.2022**
(21) Application number: 19928736.8
(22) Date of filing: 10.05.2019
(51) Int. Cl.: H04B 7/06, H04W 16/28, H04W 72/04, H04W 88/02

(54) **USER TERMINAL AND WIRELESS COMMUNICATION METHOD**

(71) Applicant: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2019/018835
(87) International publication number: WO 2020/230217

(57) **Abstract**

A user terminal according to an aspect of the present disclosure includes a control section that uses, for a spatial relation of specific uplink transmission, a reference signal related to quasi-co-location (QCL) of specific downlink transmission or a spatial relation of uplink transmission satisfying a certain condition, based on at least one of a downlink control information (DCI) format for scheduling the specific uplink transmission and reported capability information, and a transmitting section that performs the uplink transmission in accordance with the spatial relation of the specific uplink transmission. According to one aspect of the present disclosure, UL beams can be appropriately controlled.

## Description

### Technical Field

The present disclosure relates to a user terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (for example, LTE Rel. 8 to Rel. 14), a user terminal (UE) controls transmission of an uplink shared channel (Physical Uplink Shared Channel (PUSCH)) based on downlink control information (DCI).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), studies have been conducted about designation of one of a plurality of candidates configured by higher layer signaling for a beam for uplink (UL) transmission (spatial relation) of a PUCCH, a PUSCH, an SRS, or the like by using media access control (Medium Access Control (MAC)) control elements (CEs), downlink control information (DCI), or the like.

However, the number of configurable candidates is limited. Due to the use of many candidates, reconfiguration using higher layer signaling may cause delay, consumption of resources, and the like.

Thus, an object of the present disclosure is to provide a user terminal and a radio communication method that can appropriately control UL beams.

### Solution to Problem

A user terminal according to an aspect of the present disclosure includes a control section that uses, for a spatial relation of specific uplink transmission, a reference signal related to quasi-co-location (QCL) of specific downlink transmission or a spatial relation of uplink transmission satisfying a certain condition, based on at least one of a downlink control information (DCI) format for scheduling the specific uplink transmission and reported capability information, and a transmitting section that performs the uplink transmission in accordance with the spatial relation of the specific uplink transmission.

### Advantageous Effects of Invention

According to one aspect of the present disclosure, UL beams can be appropriately controlled.

### Brief Description of Drawings

FIG. 1 is a diagram to show an example of beam correspondence;
FIG. 2 is a diagram to show an example of a spatial relation of a specific UL transmission;
FIGS. 3A and 3B are diagrams to show examples of a QCL assumption of a PDSCH;
FIG. 4 is a diagram to show an example of a schematic structure of a radio communication system according to one embodiment;
FIG. 5 is a diagram to show an example of a structure of a base station according to one embodiment;
FIG. 6 is a diagram to show an example of a structure of a user terminal according to one embodiment; and
FIG. 7 is a diagram to show an example of a hardware structure of the base station and the user terminal according to one embodiment.

### Description of Embodiments

### (TCI, Spatial Relation, QCL)

For NR, studies have been conducted about control of reception processing (for example, at least one of reception, demapping, demodulation, and decoding) and transmission processing (for example, at least one of transmission, mapping, precoding, modulation, and coding) for at least one of a signal and a channel (expressed as a signal/channel) in a UE, based on a transmission configuration indication state (TCI state).

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information (SRI), or the like. The TCI state may be configured for the UE for each channel or for each signal.

QCL is an indicator indicating statistical properties of the signal/channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameters (or parameter sets) that can be assumed to be identical, and such parameters will be described below:
- QCL type A: Doppler shift, Doppler spread, average delay, and delay spread
- QCL type B: Doppler shift and Doppler spread
- QCL type C: Doppler shift and Average delay
- QCL type D: Spatial reception parameter.

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (or a reference signal (RS) for the channel) and another signal (for example, another downlink reference signal (DL-RS)). The TCI state may be configured (indicated) by higher layer signaling or physical layer signaling, or a combination of these.

In the present disclosure, for example, the higher layer signaling may be any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit y(PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

A channel for which the TCI state is configured (designated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS (DL-RS) to have a QCL relationship with the channel may be, for example, at least one of a synchronization signal block (SSB), a channel state information reference signal (CSI-RS), and a reference signal for measurement (Sounding Reference Signal (SRS)). Alternatively, the DL-RS may be a CSI-RS used for tracking (also referred to as a Tracking Reference Signal (TRS)), or a reference signal used for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An information element of the TCI state ("TCI-state IE" of RRC) configured using higher layer signaling may include one or a plurality of pieces of QCL information ("QCL-Info"). The QCL information may include at least one of information related to the DL-RS to have a QCL relationship (DL-RS relation information) and information indicating a QCL type (QCL type information). The DL-RS relation information may include information such as an index of the DL-RS (for example, an SSB index, or a non-zero power CSI-RS (NZP CSI-RS) resource ID (Identifier)), an index of a cell in which the RS is located, and an index of a Bandwidth Part (BWP) in which the RS is located.

### <TCI State for PDCCH>

Information related to QCL with a PDCCH (or a demodulation reference signal (DMRS) antenna port associated with the PDCCH) and a certain DL-RS may be referred to as a TCI state for the PDCCH and so on.

The UE may determine the TCI state for a UE-specific PDCCH (CORESET), based on higher layer signaling. For example, one or a plurality of (K) TCI states may be configured for the UE for each CORESET by RRC signaling.

For the UE, for each CORESET, one of the plurality of TCI states configured by the RRC signaling may be activated by a MAC CE. The MAC CE may be referred to as a TCI state indication MAC CE for the UE-specific PDCCH (TCI state indication for UE-specific PDCCH MAC CE). The UE may monitor the CORESET based on an active TCI state corresponding to the CORESET.

### <TCI State for PDSCH>

Information related to QCL with a PDSCH (or a DMRS antenna port associated with the PDSCH) and a certain DL-RS may be referred to as a TCI state for the PDSCH and so on.

The UE may be notified of (configured with) M (M ≥ 1) TCI states for the PDSCH (M pieces of QCL information for the PDSCH) by the higher layer signaling. Note that the number M of TCI states configured for the UE may be limited by at least one of UE capability and QCL type.

DCI used for scheduling of the PDSCH may include a certain field (which may be referred to as, for example, a TCI field, a TCI state field, and so on) indicating the TCI state of the PDSCH. The DCI may be used for scheduling of the PDSCH on one cell, and may be referred to as, for example, DL DCI, DL assignment, DCI format 1_0, DCI format 1_1, and so on).

Whether the TCI field is included in the DCI may be controlled by information notified to the UE from the base station. The information may indicate whether the TCI field is present in or absent from the DCI (for example, TCI presence information, TCI present-in-DCI information, a higher layer parameter TCI-PresentInDCI). For example, the information may be configured for the UE by the higher layer signaling.

In a case where more than eight types of TCI states are configured for the UE, eight or less types of TCI states may be activated (or designated) by using the MAC CE. The MAC CE may be referred to as a TCI States Activation/Deactivation for UE-specific PDSCH MAC CE. The value of the TCI field in the DCI may indicate one of the TCI states activated by the MAC CE.

In a case where the UE is configured for TCI presence information with "enabled" set for a CORESET scheduling the PDSCH (the CORESET used for PDCCH transmission scheduling the PDSCH), the UE may assume that TCI field is present in DCI format 1_1 for the PDCCH transmitted on the CORESET.

In a case where no TCI presence information is configured for the CORESET scheduling the PDSCH or the PDSCH is scheduled by DCI format 1_0, the UE may assume that the TCI state or QCL assumption for the PDSCH is identical to the TCI state or QCL assumption applied to the CORESET used for PDCCH transmission scheduling the PDSCH in order to determine the QCL of the PDSCH antenna port in a case where a time offset between reception of DL DCI (the DCI scheduling the PDSCH) and reception of the PDSCH corresponding to the DCI is equal to or greater than a threshold.

In a case where the TCI presence information is set as "enabled," the TCI field in the DCI in a scheduling component carrier (CC) (scheduling the PDSCH) indicates a CC to be scheduled or an activated TCI state in a DL BWP, and the PDSCH is scheduled by DCI format 1_1, the UE may use the TCI including DCI and following the value of the TCI field in the detected PDCCH in order to determine the QCL of the PDSCH antenna port. In a case where a time offset between reception of DL DCI (scheduling the PDSCH) and the PDSCH corresponding to the DCI (the PDSCH scheduled by the DCI) is equal to or greater than a threshold, the UE may assume that a DM-RS port for the PDSCH on the serving cell is quasi-co-located (QCLed) with the RS in the TCI state related to a QCL type parameter provided by the indicated TCI state.

In a case where the UE is configured with a single slot PDSCH, the indicated TCI state may be based on the activated TCI state in a slot including the scheduled PDSCH. In a case where the UE is configured with a plurality of slot PDSCHs, the indicated TCI state may be based on the activated TCI state in the first one of the slots including the scheduled PDSCHs, and the UE may expect that the TCI state is identical over the slots including the scheduled PDSCHs. In a case where the UE is configured with a CORESET associated with a search space set for cross carrier scheduling, for the UE, the TCI presence information is set as "enabled" for the CORESET. In a case where the QCL type D is included in at least one of the TCI states configured for the serving cell scheduled by the search space set, the UE may assume that a time offset between the detected PDCCH and the PDSCH corresponding to the PDCCH is equal to or greater than a threshold.

In an RRC connection mode, both in a case where TCI-in-DCI information (higher layer parameter TCI-PresentInDCI) is set as "enabled" and in a case where no TCI-in-DCI information is configured, the UE may assume that the DM-RS port for the PDSCH on the serving cell has the smallest (lowest) CORESET-ID in the newest (latest) slot in which one or more CORESETs in the active BWP of the serving cell are monitored by the UE and is quasi-co-located with the RS related to the QCL parameter used for QCL indication of the PDCCH for the CORESET associated with a monitored search space, when a time offset between reception of DL DCI (the DCI scheduling the PDSCH) and the corresponding PDSCH (the PDSCH scheduled by the DCI) is less than a threshold.

The time offset between reception of the DL DCI and reception of the PDSCH corresponding to the DCI may be referred to as a scheduling offset.

The above-described threshold may be referred to as "Threshold," "Threshold for offset between a DCI indicating a TCI state and a PDSCH scheduled by the DCI," "Threshold-Sched-Offset," "timeDurationForQCL," a schedule offset threshold, a scheduling offset value, a QCL time length, and so on.

The scheduling offset threshold may be based on the UE capability and may be, for example, based on delay involved in decoding of the PDCCH and beam switching. The information of the scheduling offset threshold may be configured by the base station by using the higher layer signaling or may be transmitted from the UE to the base station.

For example, the UE may assume that the DMRS port of the PDSCH described above is quasi-co-located with the DL-RS based on the TCI state activated for the CORESET corresponding to the smallest CORESET-ID described above. The newest slot may be, for example, a slot receiving the DCI scheduling the PDSCH described above.

Note that the CORESET-ID may be an ID configured by an RRC information element "ControlResourceSet" (the ID for identification of the CORESET).

### <Spatial Relation for PUCCH>

The UE may be configured with a parameter used for PUCCH transmission (PUCCH configuration information, PUCCH-Config) by the higher layer signaling (for example, Radio Resource Control (RRC) signaling). The PUCCH configuration information may be configured for each partial band (for example, uplink bandwidth part (BWP)) in a carrier (also referred to as a cell, a component carrier, and so on).

The PUCCH configuration information may include a list of PUCCH resource set information (for example, PUCCH ResourceSet) and a list of PUCCH spatial relation information (for example, PUCCH-SpatialRelationInfo).

The PUCCH resource set information may include a list (for example, resourceList) of PUCCH resource indexes (IDs, for example, PUCCH-ResourceId).

In a case that the UE includes no dedicated PUCCH resource configuration information (for example, dedicated PUCCH resource configuration) provided by PUCCH resource set information in the PUCCH configuration information (before RRS setup), the UE may determine a PUCCH resource set, based on a parameter (for example, pucch-ResourceCommon) in system information (for example, System Information Block Type1(SIB1) or Remaining Minimum System Information (RSMI)). The PUCCH resource set may include 16 PUCCH resources.

On the other hand, in a case that the UE includes the dedicated PUCCH resource configuration information described above (UE dedicated uplink control channel configuration, dedicated PUCCH resource configuration) (after RRC setup), the UE may determine the PUCCH resource set in accordance with the number of UCI information bits.

The UE may determine one PUCCH resource (index) in the PUCCH resource set described above (for example, the PUCCH resource set determined to be specific to the cell or to be dedicated to the UE), based on at least one of the value of a certain field (for example, PUCCH resource indicator field) in downlink control information (DCI) (for example, DCI format 1_0 or 1_1 used for scheduling of the PDSCH), the number of CCEs (N_{CCE}) in a control resource set (CORESET) for reception of the PDCCH carrying the DCI, and the index (n_{CCE}, ₀) of a leading (first) CCE for reception of the PDCCH.

The PUCCH spatial relation information (for example, an RRC information element "PUCCH-spatialRelationInfo") may indicate a plurality of candidate beams (spatial domain filters) for PUCCH transmission. The PUCCH spatial relation information may indicate the spatial relation between the RS (Reference Signal) and the PUCCH.

The list of PUCCH spatial relation information may include several elements (PUCCH spatial relation information elements (IEs)). Each piece of PUCCH spatial relation information may include at least one of, for example, the index (ID, for example, pucch-SpatialRelationInfoId) of the PUCCH spatial relation information, the index (ID, for example, servingCellId) of the serving cell, and information related to an RS (reference RS) having spatial relation with the PUCCH.

For example, the information related to the RS may be an SSB index, a CSI-RS index (for example, an NZP-CSI-RS resource configuration ID), or an SRS resource ID and a BWP ID. The SSB index, the CSI-RS index, and the SRS resource ID may be associated with at least one of a beam, a resource, and a port selected by measurement of the corresponding RS.

The UE may be receive indication of one of more than one piece of PUCCH spatial relation information (for example, PUCCH-SpatialRelationInfo or candidate beams) in the list of PUCCH spatial relation information by a MAC (Medium Access Control) CE (Control Elements). The MAC CE may be a MAC CE activating or deactivating PUCCH spatial relation information (PUCCH spatial relation information activation/deactivation MAC CE, PUCCH spatial relation information indicator MAC CE).

Three microseconds after transmission of a positive acknowledgment (ACK) for a MAC CE activating certain PUCCH spatial relation information, the UE may activate PUCCH related information designated by the MAC CE.

The UE may control transmission of the PUCCH, based on the PUCCH spatial relation information activated by the MAC CE. Note that in a case where the list of PUCCH spatial relation information includes a single piece of PUCCH spatial relation information, the UE may control transmission of the PUCCH, based on the PUCCH spatial relation information.

### <SRS, Spatial Relation for PUSCH>

The UE may receive information (SRS configuration information, for example, a parameter in an RRC control element "SRS-Config") used to transmit measurement reference signal (for example, a sounding reference signal (SRS)).

Specifically, the UE may receive at least one of information related to one or a plurality of SRS resource sets (SRS resource set information, for example, an RRC control element "SRS-ResourceSet") and information related to one or a plurality of SRS resources (SRS resource information, for example, an RRC control element "SRS-Resource").

One SRS resource set may be associated with a certain number of SRS resources (the certain number of SRS resources may be grouped). Each SRS resource may be identified by an SRS resource indicator (SRI) or an SRS resource ID (Identifier).

The SRS resource set information may include an SRS resource set ID (SRS-ResourceSetId), a list of SRS resource IDs (SRS-Resourceld) used in the resource set, an SRS resource type (for example, any of a periodic SRS, a semi-persistent SRS, or an aperiodic SRS), and information of usage of an SRS.

In this regard, the SRS resource type may indicate any of the periodic SRS (P-SRS), the semi-persistant SRS (SP-SRS), or the aperiodic SRS (A-SRS). Note that the UE may periodically transmit the P-SRS and the SP-SRS (or periodically perform the transmission after activation) and transmit the A-SRS based on an SRS request in the DCI.

The intended use (RRC parameter "usage," an L1 (Layer-1) parameter "SRS-SetUse") may be, for example, beam management (beamManagement), codebook (CB), noncodebook (NCB), antenna switching, or the like. The SRS used for a codebook or a noncodebook may be used to determine a precoder for codebook- or noncodebook-based PUSCH transmission based on the SRI.

For example, for the codebook-based transmission, the UE may determine the precoder for PUSCH transmission, based on the SRI, a transmitted rank indicator (TRI), and a transmitted precoding matrix indicator (TPMI). For the noncodebook-based transmission, the UE may determine the precoder for PUSCH transmission based on the SRI.

The SRS resource information may include an SRS resource ID (SRS-ResourceID), the number of SRS ports, an SRS port number, transmission Comb, SRS resource mapping (for example, a time and/or frequency resource position, a resource offset, resource periodicity, the number of repetitions, the number of SRS symbols, an SRS bandwidth, and so on), hopping related information, an SRS resource type, a sequence ID, SRS spatial relation information, and so on.

The SRS spatial relation information (for example, an RRC information element "spatialRelationInfo") may indicate information of the spatial relation between a certain reference signal and the SRS. The certain reference signal may be at least one of a synchronization signal /broadcast channel (Synchronization Signal/Physical Broadcast Channel (SS/PBCH)) block, a channel state information reference signal (CSI-RS), and an SRS (for example, another SRS). The SS/PBCH block may be referred to as a synchronization signal block (SSB).

The spatial relation information of the SRS may include, as the index of the certain reference signal described above, at least one of an SSB index, a CSI-RS resource ID, and an SRS resource ID.

Note that in the present disclosure, the SSB index, the SSB resource ID, and the SSB RI (SSB Resource Indicator) may be interchangeably interpreted. The CSI-RS index, the CSI-RS resource ID, and the CRI (CSI-RS Resource Indicator) may be interchangeably interpreted. The SRS index, the SRS resource ID, and the SRI may be interchangeably interpreted.

The spatial relation information of the SRS may include a serving cell index, a BWP index (BWP ID), and so on corresponding to the certain reference signal.

In NR, transmission of uplink signals may be controlled based on whether beam correspondence (BC) is present. The BC may be, for example, the capability of a certain node (for example, a base station or UE) determining a beam (transmit beam, Tx beam) used to transmit signals based on a beam (receive beam, Rx beam) used to receive signals.

Note that the BC may be referred to as transmit/receive beam correspondence (Tx/Rx beam correspondence), beam reciprocity, beam calibration, calibrated/non-calibrated, reciprocity calibrated/non-calibrated, a degree of correspondence, a degree of concordance, and so on.

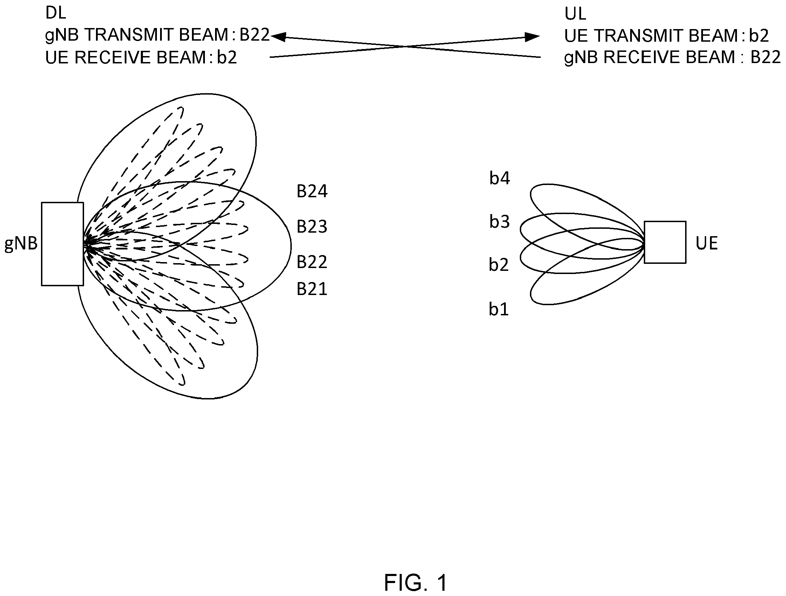

As illustrated in FIG. 1, in BC, the gNB performs transmit beam sweeping by using beams B21 to B24, and the UE performs receive beam sweeping by using beams b1 to b4, and thus based on measurement results, the gNB and the UE determine the beam B22 of the gNB to be a DL transmit beam, while determining the beam b2 of the UE to be a DL receive beam. The gNB also uses, as a UL receive beam, the beam B22 determined, whereas the UE uses, as a UL transmit beam, the beam b2 determined.

For example, with no BC, the UE may transmit uplink signals (for example, the PUSCH, the PUCCH, the SRS, and so on) by using a beam (spatial domain transmission filter) identical to the beam of the SRS (or an SRS resource) indicated by the base station based on measurement results for one or more SRSs (or SRS resources).

On the other hand, with BC, the UE may transmit uplink signals (for example, the PUSCH, the PUCCH, the SRS, and so on) by using a beam (spatial domain transmission filter) identical to or corresponding to a beam (spatial domain reception filter) used for reception of a certain SSB or CSI-RS (or CSI-RS resource).

In a case of being configured, for a certain SRS resource, with spatial relation information related to the SSB or CSI-RS and the SRS (for example, with BC present), the UE may transmit the SRS resource by using a spatial domain filter (spatial domain transmission filter) identical to a spatial domain filter (spatial domain reception filter) for reception of the SSB or CSI-RS. In this case, the UE may assume that the UE receive beam for the SSB or CSI-RS is identical to the UE transmit beam for the SRS.

In a case of being configured, for a certain SRS (target SRS) resource, with spatial relation information related to the SRS (target SRS) and another SRS (reference SRS) (for example, with BC absent), the UE may transmit the target SRS resource by using a spatial domain filter (spatial domain transmission filter) identical to a spatial domain filter (spatial domain transmission filter) for transmission of the reference SRS. In other words, in this case, the UE may assume that the UE transmit beam for a reference SRS is identical to the UE transmit beam for a target

### SRS.

Based on the value of a certain field (for example, an SRS resource identifier (SRI) field) in the DCI (for example, DCI format 0_1), the UE may determine a spatial relation of the PUSCH scheduled by the DCI. Specifically, the UE may use, for PUSCH transmission, the spatial relation information of the SRS resource (for example, an RRC information element "spatialRelationInfo") determined based on the value of the certain field (for example, the SRI).

### (Multiple TRPs)

In NR, studies have been conducted about one or a plurality of transmission/reception points (TRPs) (multiple TRPs) performing DL transmission to the UE by using one or a plurality of panels (multiple panels). Studies have also been conducted by the UE performing UL transmission to one or a plurality of TRPs.

Note that the plurality of TRPs may correspond to an identical cell identifier (ID) or different identifiers. The cell ID may be a physical cell ID or a virtual cell ID.

Each of the multiple TRPs may transmit a different code word (CW) and a different layer. Non-coherent joint transmission (NCJT) has been studied as one form of multiple-TRP transmission.

In NCJT, for example, TRP1 performs modulation mapping and layer mapping on a first codeword, and transmits a first PDSCH by using first precoding for a first number of layers (for example, two layers). TRP2 performs modulation mapping and layer mapping on a second codeword, and transmits a second PDSCH by using second precoding for a second number of layers (for example, two layers). The first PDSCH and the second PDSCH may be assumed to be not quasi-co-located.

Note that a plurality of PDSCHs subjected to NCJT may be defined to partially or completely overlap in terms of at least one of a time domain and a frequency domain. In other words, the first PDSCH from the first TRP and the second PDSCH from the second TRP may overlap in terms of at least one of the time resource and the frequency resource.

Incidentally, as one Hybrid Automatic Repeat reQuest ACKnowledgement (HARQ-ACK) feedback for multiple PDSCHs, separate HARQ-ACK has been studied.

The separate HARQ-ACK corresponds to feedback in which each TRP transmits the HARQ-ACK by using a plurality of uplink control channel (Physical Uplink Control Channel (PUCCH))/uplink shared channel (Physical Uplink Shared Channel (PUSCH)) resources. The plurality of PUCCH/PUSCH resources may or may not overlap (be simultaneously transmitted).

Note that the PUCCH/PUSCH may mean at least one of the PUCCH and the PUSCH ("A/B" may hereinafter be similarly interpreted as "at least one of A and B").

The DCI scheduling the multiple PDSCHs may include a field of a PUCCH resource indicator (PRI). The PRI corresponds to information designating a resource for transmitting the HARQ-ACK corresponding to the PDSCH, and may be referred to as an ACK/NACK resource indicator (ARI).

The UE may determine a PUCCH resource for transmitting the HARQ-ACK corresponding to the multiple PDSCHs described above, based on the PRI.

The use of the separate HARQ-ACK enables independent HARQ-ACK transmission for each TRP. Even with a long backhaul delay between TRPs (for example, the TRPs are connected by a non ideal backhaul), a long HARQ delay is prevented.

Temporal overlapping may or may not be permitted for the PUCCH resource for the separate HARQ-ACK for each TRP. The definition of the PUCCH resource group has been studied in order to flexibly control the PUCCH resource for the separate HARQ-ACK.

For example, the UE configured with a PUCCH resource group by the network may assume that none of the PUCCH resources included in a first PUCCH resource group temporally overlap any of the PUCCH resources included in a second PUCCH resource group. The PUCCH resource group is not explicitly configured by the network, and the UE may group PUCCH resources configured by the network in accordance with a certain rule to consider the PUCCH resources to be a PUCCH resource group. The UE may use the value of a PUCCH resource indicator field in the DCI received to group the corresponding PUCCH resources. For example, depending on whether the value of the PUCCH resource indicator field (for example, 000 to 111) is 1 or 0 at a certain bit position (for example, the most significant bit or the least significant bit), the UE may group the corresponding PUCCH resources. The UE may use a PUCCH resource ID configured from the network via the higher layer signaling to group the corresponding PUCCH resources. For example, depending on whether the PUCCH resource ID is odd or even number or is greater or smaller than a certain value, the UE may group the corresponding PUCCH resources.

For multiple-TRP transmission, the separate HARQ-ACK feedback may be supported. Indication, update, and the like of the spatial relation information may be performed for each PUCCH resource group.

One or more PUCCH resource groups may be configured in the PUCCH resource set. Each PUCCH resource group may be provided with an ID.

The "group" as used herein may be interpreted as grouping, a sequence, a list, a set, and so on. The resource group may be interpreted as one or a plurality of resources.

### (Determination Method for Spatial Relation)

As described above, for the PDCCH or the PDSCH, a plurality of TCI states may be configured for the UE by RRC or one of the plurality of TCI states may be indicated to the UE by using the MAC CE or DCI. Consequently, the beam can be quickly switched without RRC reconfiguration.

The maximum number of TCI states that can be configured by RRC (maxNrofTCI-States) is 128, and the maximum number of TCI states for the PDCCH (maxNrofTCI-StatesPDCCH) is 64.

In regard to the PUCCH, for one PUCCH resource, eight spatial relations may be configured for the UE by RRC, and one spatial relation may be indicated to the UE by using the MAC CE. RRC reconfiguration is required to use a spatial relation other than the eight spatial relations configured by RRC.

In a case where the codebook-based transmission is used for the PUSCH, two SRS resources may be configured for the UE by RRC, and one of the two SRS resources may be indicated to the UE by using the DCI (one-bit field). In a case where the noncodebook-based transmission is used for the PUSCH, four SRS resources may be configured for the UE by RRC, and one of the four SRS resources may be indicated to the UE by using the DCI (two-bit field). RRC reconfiguration is required to use a spatial relation other than the two or four spatial relations configured by RRC.

The DL-RS can be configured for the spatial relation among the SRS resources used for the PUSCH. For the SP-SRS, the spatial relation among a plurality of (for example, up to 16) SRS resources may be configured for the UE by RRC, and one of the plurality of SRS resources can be indicated to the UE by using the MAC CE. For A-SRS and P-SRS, the spatial relation among the SRS resources is not possible to be indicated to the UE by using the MAC CE.

As described above, as the spatial relation for UL transmission (PUCCH, PUSCH, or SRS), many candidates for the spatial relation may need to be configured at a time. For example, in a case where the DL-RS (the TCI state of the DL) is used as the spatial relation for UL transmission by beam correspondence, many DL-RSs (for example, 32 SSBs) may be configured.

However, as described above, the number of candidates for the spatial relation that can be configured for the UL transmission at a time is limited and is smaller than the number of candidates for the TCI state that can be configured for the DL channel. To allow the use of a spatial relation not configured for the UL transmission, RRC reconfiguration may be used to configure another spatial relation. RRC reconfiguration may lead to an amount of time when communication is disabled, consumed resources, and the like, degrading performance of the system.

Thus, the inventors of the present invention came up with a method in which the UE assumes that the spatial relation of a specific uplink transmission is identical to the transmission control indication (TCI) state or quasi-co-location (QCL) assumption of a specific downlink channel.

In Rel. 15 NR, for the PUSCH on a cell scheduled by DCI format 0 0, the UE transmits the PUSCH in accordance with the spatial relation corresponding to a PUCCH resource with the lowest ID within the active UL BWP of the cell if available.

However, for a cell configured with no PUCCH resource (for example, a secondary cell (SCell)), the PUSCH fails to be scheduled by DCI format 0_0.

Thus, the inventors of the present invention came up with a method for determining by a UE the spatial relation for a PUSCH scheduled by DCI including no SRI.

Embodiments according to the present disclosure will be described in detail with reference to the drawings as follows. The radio communication methods according to respective embodiments may each be employed individually, or may be employed in combination.

In the present disclosure, the spatial relation may be interpreted as spatial relation information, a spatial relation assumption, spatial domain transmission filter, a UE spatial domain transmission filter, a spatial domain filter, a UE transmit beam, a UL transmit beam, a DL-RS, a QCL assumption, an SRI, a spatial relation based on an SRI, and so on.

The TCI state may be interpreted as a TCI state or QCL assumption, a QCL assumption, a spatial domain reception filter, a UE spatial domain reception filter, a spatial domain filter, a UE receive beam, a DL receive beam, a DL-RS, and so on. An RS of a QCL type D, a DL-RS associated with the QCL type D, a DL-RS with the QCL type D, a source of the DL-RS, the SSB, and the CSI-RS may be interchangeably interpreted.

In the present disclosure, the TCI state may be information (for example, the DL-RS, the QCL type, the cell in which the DL-RS is transmitted, and so on) related to the receive beam (spatial domain reception filter) indicated to (configured for) the UE. The QCL assumption may be information (for example, the DL-RS, the QCL type, the cell in which the DL-RS is transmitted, and so on) related to the receive beam (spatial domain reception filter) assumed by the UE, based on transmission or reception of the associated signal (for example, the PRACH).

In the present disclosure, a PCell, a primary secondary cell (PSCell), and a special cell (SpCell) may be interchangeably interpreted.

In the present disclosure, x or more and exceeding x may be interpreted as each other. In the present disclosure, less than x and x or less and may be interpreted as each other.

### (Radio Communication Method)

### <First Embodiment>

The UE may assume (consider) that the spatial relation of a specific UL transmission is identical to a default spatial relation or the spatial relation of a reference UL transmission.

The specific UL transmission may be interpreted as a specific UL signal or a specific UL channel, and may be interpreted as at least one of the PUSCH, the PUCCH, the SRS, an SRS resource set involving, as usage, codebook transmission (codebook) or noncodebook transmission (nonCodebook) and including usage information indicating codebook transmission (codebook) or noncodebook transmission (nonCodebook), and an SRS resource in an SRS resource set involving, as usage, codebook transmission or noncodebook transmission.

The specific UL transmission may be at least one of the PUSCH and the SRS. This enables a reduction in changes in specifications.

The following may be interchangeably interpreted: spatial relation of specific UL transmission, the RS in the spatial relation of the specific UL transmission, the spatial relation of the SRS configuration information, the PUCCH spatial relation information, the PUSCH spatial relation, the spatial relation information of specific UL transmission, the RS in the spatial relation of the specific UL transmission, and the spatial domain transmission filter of the specific UL transmission. In a case where the specific UL transmission is the PUSCH, the spatial relation of the specific UL transmission may be interpreted as the SRI, the spatial relation of the SRI, and the spatial domain transmission filter.

The following may be interchangeably interpreted: default spatial relation, the TCI state or QCL assumption of the specific DL channel, the RS related to the QCL parameter provided by the TCI state or QCL assumption of the specific DL channel, and the RS of the QCL type D in the TCI state or QCL assumption of the specific DL channel.

The specific DL channel may be interpreted as at least one of the specific DL transmission, the specific RS, the PUCCH, and the PDSCH.

The reference UL transmission may be a UL transmission satisfying a certain condition, may be the newest PUSCH transmission, may be the newest PUCCH transmission, may be the newest PRACH transmission, may be the newest SRS transmission, may be the newest UL transmission, or may be the newest transmission of at least one of the PUSCH, PUCCH, PRACH, and the SRS.

As the RS in the spatial relation of the specific UL transmission for determining the UL transmit beam (spatial domain transmission filter), the RS of the QCL type D in the TCI state or QCL assumption of the specific DL channel for determining the UE receive beam (spatial domain reception filter) is preferably used. In specific, in a case where the TCI state or QCL assumption of the specific DL channel includes both the RS of the QCL type A and the RS of the QCL type D, and the RS of the QCL type A differs from the RS of the QCL type D, then as the RS in the spatial relation of the specific UL transmission, the RS of the QCL type D in the TCI state or QCL assumption of the specific DL channel is preferably used.

For example, as described above, in a case where the TCI state indicates the RS of the QCL type A corresponding to the TRS of a serving cell (for example, the SCell) configured with the TCI state and the RS of the QCL type D corresponding to the CSI-RS of another serving cell (for example, the PCell) configured with repetition, the RS of the QCL type A differs from the RS of the QCL type D. The parameter of the QCL type A may be assumed to vary from cell to cell, and thus the RS of the QCL type A is preferably transmitted in the cell configured with the TCI state. On the other hand, the RS of the QCL type D may be transmitted in the serving cells other than the cell configured with the TCI state. Note that the serving cell configured with the TCI state may be the PCell and that the serving cell in which the RS of the QCL type D is transmitted may be the SCell.

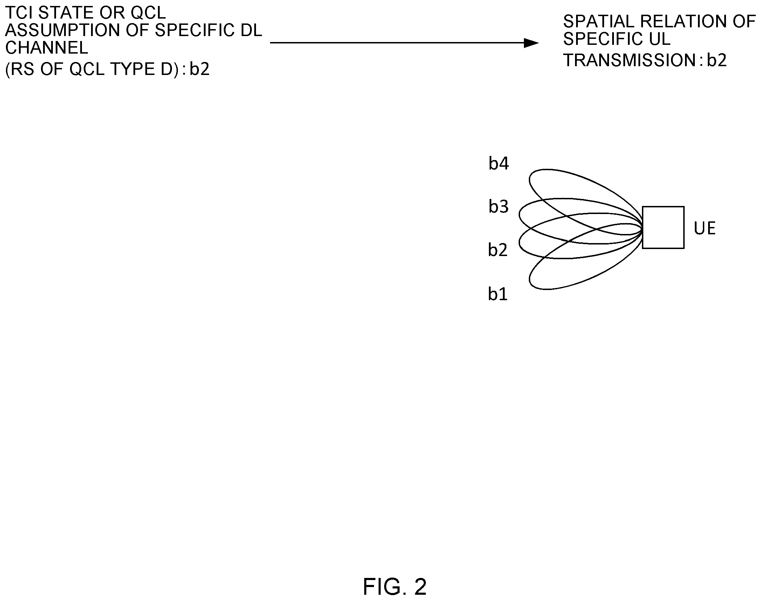

As shown in FIG. 2, the UE may use the RS of the QCL type D in the TCI state (for example, the DL-RS, spatial domain reception filter, spatial domain reception filter, or UE receive beam) of the specific DL channel as the RS in the spatial relation (for example, the DL-RS, spatial domain filter, spatial domain transmission filter, or UE transmit beam) of the specific UL transmission.

### <<Conditions for Applying Default Spatial Relation>>

In a case of not being configured with the spatial relation of the specific UL transmission (for example, spatialRelationInfo, PUCCH-SpatialRelationInfo) (or the UE is configured with a specific parameter by using a specific higher layer parameter), the UE may assume that the spatial relation of the specific UL transmission is identical to the default spatial relation or the spatial relation of the reference UL transmission.

In frequency range 1 (FR1, a frequency of 6 GHz or less), the UE need not use analog beam forming for UL transmission or need not be configured with the spatial relation for UL transmission.

In frequency range 2 (FR2, a frequency of higher than 6 GHz (or a frequency of higher than 24 GHz)), the UE may assume that the spatial relation of the specific UL transmission is identical to the default spatial relation (the RS in the spatial relation of the specific UL transmission is identical to the RS of the QCL type D in the TCI state of the specific DL channel). In FR2, in a case of not being configured with the spatial relation of the specific UL transmission, the UE may assume that the spatial relation of the specific UL transmission is identical to the default spatial relation.

In a case where the RS of the QCL type D in the TCI state of the specific DL channel is applicable, the UE may assume that the RS in the spatial relation of the specific UL transmission is identical to the RS of the QCL type D in the TCI state of the specific DL channel. In a case where the RS of the QCL type D in the TCI state of the specific DL channel is applicable and where the UE is not configured with the spatial relation of the specific UL transmission, the UE may assume that the spatial relation of the specific UL transmission is identical to the default spatial relation.

In FR2, in a case where the RS of the QCL type D in the TCI state of the specific DL channel is applicable, the UE may assume that the RS of the spatial relation of the specific UL transmission is identical to the RS of the QCL type D in the TCI state of the specific DL channel. In FR2, in a case where the RS of the QCL type D in the TCI state of the specific DL channel is applicable and where the UE is not configured with the spatial relation of the specific UL transmission, the UE may assume that the RS in the spatial relation of the specific UL transmission is identical to the RS of the QCL type D in the TCI state of the specific DL channel.

In a case where no spatial relation is configured for an SRS resource set (or an SRS resource in the SRS resource set) involving, as usage, codebook transmission (codebook) or noncodebook transmission (nonCodebook), the UE may assume that the spatial relation of the specific UL transmission is identical to the default spatial relation. In FR2, in a case where no spatial relation is configured for the SRS resource set (or an SRS resource in the SRS resource set) involving, as usage, codebook transmission or noncodebook transmission, the UE may assume that the spatial relation of the specific UL transmission is identical to the default spatial relation. In FR2, in a case where no spatial relation is configured for the SRS resource set (or an SRS resource in the SRS resource set) involving, as usage, codebook transmission or noncodebook transmission, the UE may assume that the spatial relation for the SRS resource is identical to the default spatial relation.

In a case where the usage of the SRS resource set is beam management (beamManagement), the uses of the default spatial relation for the SRS spatial relation by the UE leads the used of an identical beam (default spatial relation) for all SRS symbols by the UE, preventing SRS beams from being swept. Using by the UE the default spatial relation as the SRS spatial relation only in a case where the usage of the SRS resource set is codebook transmission or noncodebook transmission enables the beam to be swept in a case where the usage of the SRS resource set is beam management.

In a case of being configured with a certain function of Rel. 16 or later versions, the UE may assume that the spatial relation of the specific UL transmission is identical to the default spatial relation (the RS in the spatial relation of the specific UL transmission is identical to the RS of the QCL type D in the TCI state of the specific DL channel). Ia case of being configured with the certain function and not being configured with the spatial relation of the specific UL transmission, the UE may assume that the spatial relation of the specific UL transmission is identical to the default spatial relation.

The certain function may be a beam related function of Rel. 16 or later versions. The certain function may be configured for the UE by the higher layer signaling. The beam related function may be at least one of low latency beam selection, Layer 1 (L1)-Signal to Interference plus Noise Ratio (SINR) beam reporting (L1-SINR beam reporting), and a BFR on a secondary cell (SCell) (BFR on SCell). The low delay beam selection may be referred to as fast beam selection, beam selection without TCI state (beam selection w/o TCI state), beam selection type II, a TCI state specification type 2, and so on. The L1-SINR beam reporting may reporting of measurement results of L1-SINR (CSI, L1-SINR corresponding to the beam) for beam management by the UE. The BFR on SCell may be at least one of detection of beam failure (BF) in the SCell, transmission of a beam failure recovery request (BFRQ) to the SCell, and reception of beam failure recovery (BFR) response from the SCell.

The UE may report a specific UE capability information. The specific UE capability information may indicate support of assumption that the spatial relation of the specific UL transmission is identical to the default spatial relation (the RS in the spatial relation of the specific UL transmission is identical to the RS of the QCL type D in the TCI state of the specific DL channel) or support of the certain function described above. The specific UE capability information may include a parameter indicating support of the default spatial relation or a parameter having a name indicating the default spatial relation or the default spatial relation information (default spatial relation info). In a case of reporting the specific UE capability information, the UE may assume that the spatial relation of the specific UL transmission is identical to the default spatial relation. In a case of reporting the specific UE capability information and not being configured with the spatial relation of the specific UL transmission, the UE may assume that the spatial relation of the specific UL transmission is identical to the default spatial relation. In a case of not reporting the specific UE capability information, the UE may assume to be configured with the spatial relation of the specific UL transmission.

The UE supporting the default spatial relation may report UE capability information indicating support of the default spatial relation.

The UE supporting the default spatial relation may report UE capability information indicating a channel type supporting the default spatial relation. The channel type may be at least one of the PUCCH, the SRS, and the PUSCH.

The UE supporting the default spatial relation may report UE capability information indicating a QCL source type supporting the default spatial relation. The QCL source type may be at least one of the CORESET, the PDCCH, and the PDSCH.

The UE not supporting the default spatial relation (for example, the UE not having reported support of the default spatial relation, and the UE having reported non-support of the default spatial relation) may use the spatial relation of the reference UL transmission instead of the default spatial relation. In other words, the UE not supporting the default spatial relation may assume that the spatial relation of the specific UL transmission is identical to the spatial relation of the reference UL transmission.

Reporting the specific UE capability information enables a reduction in the overhead of notification (at least one of configuration and activation) related to the spatial relation information.

### <<TCI State or QCL Assumption Used as Default Spatial Relation>>

The default spatial relation may be interpreted as an active TCI state (activated TCI state), an active TCI state or QCL assumption, and so on.

A plurality of TCI states may be active for a specific DL channel. In this case, the default spatial relation may be a default TCI state (a default RS or a default TCI state or QCL assumption).

The default TCI state may be interpreted as an RS related to the QCL parameter used for QCL indication of the PDCCH in a CORESET having the lowest CORESET-ID in the newest slot in which one or more CORESETs in the active BWP of the serving cell are monitored by the UE, the CORESET being associated with a monitored search space, may be interpreted as the TCI state or QCL assumption of the CORESET having the lowest CORESET-ID in the newest slot and associated with the monitored search space, may be interpreted as the TCI state or QCL assumption of the CORESET having the lowest CORESET-ID in a specific slot and associated with the monitored search space, may be interpreted as the TCI state or QCL assumption of a specific CORESET, may be interpreted as the TCI state or QCL assumption (for example, the RS of the QCL type D in the TCI state or QCL assumption) of a DL channel corresponding to a specific UL transmission (or the DL channel triggering the specific UL transmission, the DL channel scheduling the specific UL transmission, or the DL channel scheduling the DL channel corresponding to the specific UL transmission), or may be interpreted as an RS related to the QCL parameter of the specific DL channel (the RS quasi-co-located with the specific DL channel (for example, the RS of the QCL type D)).

The specific slot may be the newest slot in PDSCH reception or may be the newest slot in the specific UL transmission. The specific CORESET may be a CORESET designated by the higher layer signaling (for example, spatial relation information of the specific UL transmission).

The CORESET used for the default TCI state may or may not include CORESET 0.

The default spatial relation may be the spatial relation of a reference UL transmission. For example, the default spatial relation may be the spatial relation of the newest PRACH transmission.

In a case where the specific UL transmission is the PUSCH on a certain cell, the specific DL channel may be a PUCCH resource having the lowest ID within the active UL BWP of the cell or may be a PUCCH resource group having the lowest ID within the active UL BWP of the cell.

In a case where the specific UL transmission is the PUCCH, the specific DL channel may be the PDCCH corresponding to the PUCCH (the PDCCH scheduling the PDSCH corresponding to the HARQ-ACK carried on the PUCCH) or may be the PDSCH corresponding to the HARQ-ACK carried on the PUCCH. In a case where the specific UL transmission is the PUSCH, the specific DL channel may be the PDCCH scheduling the PUSCH, may be the PDCCH scheduling the PDSCH corresponding to the HARQ-ACK carried on the PUSCH, or may be the PDSCH corresponding to the HARQ-ACK carried on the PUSCH. In a case where the specific UL transmission is the A-SRS, the specific DL channel may be the PDCCH triggering the A-SRS. In a case where the specific UL transmission is a UL transmission such as the SP-SRS which is triggered by the MAC CE, the specific DL channel may be the PDCCH scheduling the MAC CE or may be the PDSCH carrying the MAC CE.

For example, in a case where the specific UL transmission is the PUCCH (or PUSCH) carrying the HARQ-ACK, the specific DL channel may be the PDCCH indicating the resource for the PUCCH (the PDCCH scheduling the PDSCH corresponding to the HARQ-ACK) or may be the PDSCH corresponding to the HARQ-ACK (the PDSCH used to generate the HARQ-ACK).

The specific DL channel may be the newest PDSCH.

The specific DL channel may be configured for the UE by the higher layer signaling or may be defined in specifications.

### <<Time Offset in DL and UL>>

In a case that the UE is not configured with the spatial relation of the specific UL transmission or in a case that the UE is configured with a specific parameter by using a specific higher layer parameter, the UE may assume that the spatial relation of the specific UL transmission (for example, the RS in the spatial relation) is identical to the TCI state or QCL assumption applied to the CORESET used for PDCCH transmission for scheduling the specific DL channel (for example, the RS of the QCL type D in the TCI state or QCL assumption) when the time offset between reception of the DCI (for example, the DCI scheduling the specific DL channel) and reception of the specific DL channel is equal to or greater than a threshold.

In a case that the UE is not configured with the spatial relation of the specific UL transmission or in a case that the UE is configured with a specific parameter by using a specific higher layer parameter, the UE may assume that the spatial relation (for example, the RS in the spatial relation) of the specific UL transmission is identical to the default spatial relation when the time offset between reception of the DCI (for example, the DCI scheduling the specific DL channel) and reception of the specific DL channel is equal to or greater than a threshold.

In a case where no TCI presence information (for example, the higher layer parameter TCI-PresentInDCI) is configured for the CORESET scheduling the PDSCH or the PDSCH is scheduled by DCI format 1_0, the UE may assume that the spatial relation (for example, the RS in the space relation) of the PUCCH (or PUSCH) carrying the HARQ-ACK for the PDSCH is identical to the TCI state or QCL assumption (for example, the RS of the QCL type D in the TCI state or the QCL assumption) applied to the CORESET used for PDCCH transmission scheduling the PDSCH when the time offset between reception of DL DCI (for example, the DCI scheduling the PDSCH) and reception of the PDSCH corresponding to the DCI is equal to or greater than a threshold.

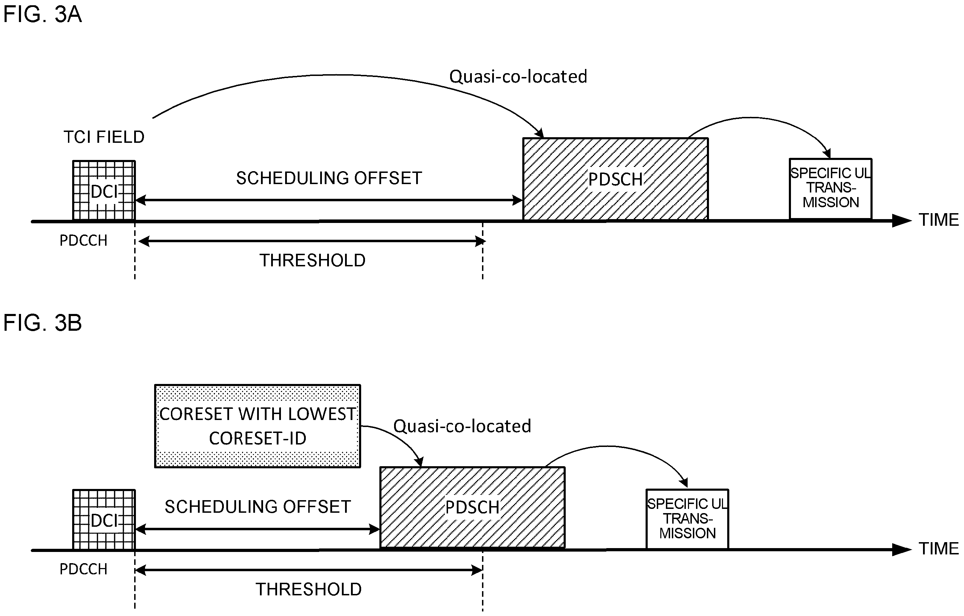

In a case where the TCI presence information is set as "enabled," the TCI field in the DCI in a scheduling component carrier (CC) (for scheduling the PDSCH) indicates a CC to be scheduled or an activated TCI state in a DL BWP, and in a case where the PDSCH is scheduled by DCI format 1_1, the UE may use the TCI including DCI and following the value of the TCI field in the detected PDCCH in order to determine the spatial relation of the PUCCH (or the PUSCH) carrying the HARQ-ACK for the PDSCH. In a case where the time offset between reception of DL DCI (scheduling the PDSCH) and the PDSCH corresponding to the DCI is equal to or greater than a threshold, the UE may assume that the spatial relation (for example, the RS in the spatial relation) of the PUCCH (or the PUSCH) carrying the HARQ-ACK for the PDSCH is quasi-co-located with the RS (for example, the RS of the QCL type D) in the TCI state related to the QCL parameter provided by the indicated TCI state (for example, FIG. 3A).

In the RRC connection mode, both in a case where the TCI presence information is set as "enabled" and in a case where no TCI-in-DCI information is configured, the UE may assume that the spatial relation (for example, the RS in the spatial relation) of the PUCCH (or PUSCH) carrying the HARQ-ACK for the PDSCH is quasi-co-located with an RS related to the QCL parameter used for QCL indication of the PDCCH in a CORESET having the lowest CORESET-ID in a specific slot (for example, the newest slot) in which one or more CORESETs in the active BWP of the serving cell are monitored by the UE, the CORESET being associated with a monitored search space, when the time offset between reception of DL DCI (the DCI scheduling the PDSCH) and the corresponding PDSCH (the PDSCH scheduled by the DCI) is less than a threshold (for example, FIG. 3B), or the UE may assume that the spatial relation of the PUCCH (or PUSCH) carrying the HARQ-ACK for the PDSCH is quasi-co-located with an RS (the RS (for example, the RS of the QCL type D) quasi-co-located with the RS (the PDSCH (the DM-RS port of the PDSCH, the antenna port of the PDSCH)) related to the QCL parameter for the PDSCH.

The specific slot may be the newest slot in the PDSCH corresponding to the specific UL transmission (for example, the PDSCH corresponding to the HARQ-ACK carried by the specific UL transmission). In this case, by using, for the spatial relation of the specific UL transmission, an RS related to the QCL parameter associated with the CORESET in the newest slot for the PDSCH, the UE can make the beam of the PDSCH (spatial domain reception filter) identical to the beam of the specific UL transmission (spatial domain transmission filter), allowing avoidance of processing for changing the beam. This reduces the load of processing.

The specific slot may be the newest slot in the specific UL transmission. In this case, by using, for the spatial relation of the specific UL transmission, an RS related to the QCL parameter associated with the CORESET in the newest slot for the specific UL transmission, the UE can make the beam of the newest PDCCH (spatial domain reception filter) identical to the beam of the specific UL transmission (spatial domain transmission filter), allowing avoidance of processing for changing the beam. This reduces the load of processing.

### <<Specific Example in which Spatial Relation of Specific UL transmission is not Configured>>

The UE not being configured with the spatial relation of the specific UL transmission may be replaced with at least one of cases 1 to 5 described below.

### <<Case 1>>

In a case where a specific field is not present in the specific higher layer parameter (for example, the RRC information element) (the information of the specific field is not configured in the specific higher layer parameter), the UE may assume that the spatial relation of the specific UL transmission is identical to the default spatial relation (the RS in the spatial relation of the specific UL transmission is identical to the RS of the QCL type D in the TCI state of the specific DL channel).

The specific higher layer parameter may be SRS configuration information (SRS-Config), PUCCH configuration information (PUCCH-Config), or the like.

In a case where the specific field is not present in the SRS resource information (SRS-Resource) in the SRS configuration information (SRS-Config), the UE may assume that the spatial relation of the specific UL transmission is identical to the default spatial relation. The specific field may be spatial relation information (spatialRelationInfo) used as the configuration of the spatial relation between the reference RS (for example, the SSB, the CSI-RS, or the SRS) and the target SRS.

In FR2, in a case where no spatial relation information is included in the SRS resources in the SRS resource set involving, as usage, codebook transmission or noncodebook transmission, the UE may assume that the spatial relation for the SRS resource is identical to the default spatial relation.

In a case where the SRS resource set information (SRS-ResourceSet) in the SRS configuration information (SRS-Config) indicates the use for codebook-based transmission or noncodebook-based transmission (the usage in the SRS resource set information indicates codebook or noncodebook (nonCodebook)) and where the specific field is not present in the SRS resource information (SRS-Resource) indicating the SRS resources in the SRS resource set, the UE may assume that the RS in the spatial relation of the PUSCH is identical to the RS of the QCL type D in the active TCI state of the specific DL channel. The specific field may be the spatial relation information (spatialRelationInfo).

In a case where the usage in the SRS resource set information indicates the codebook or the nonCodebook and where the specific field is not present in the SRS resource information (SRS-Resource) indicating the SRS resources in the SRS resource set, the UE may assume that the RS in the spatial relation of the PUSCH is identical to the RS of the QCL type D in the active TCI state of the specific DL channel. The specific field may be the spatial relation information (spatialRelationInfo).

In a case where the specific field is not present in the PUCCH configuration information (PUCCH-Config), the UE may assume that the RS in the spatial relation of the PUCCH is identical to the RS of the QCL type D in the active TCI state of the specific DL channel. The specific field may be an element of a list (spatialRelationInfoToAddModList). The element may be PUCCH spatial relation information (PUCCH-SpatialRelationInfo) used to configure spatial setting for PUCCH transmission.

### <<Case 2>>

The specific higher layer parameter (for example, the RRC information element) may indicate a specific parameter. In a case of being configured with the specific parameter by using the specific higher layer parameter (in a case of being configured with information related to the TCI state or QCL assumption) (in a case where the specific higher layer parameter indicates the specific parameter or where the specific higher layer parameter includes a field of the specific parameter), the UE may assume that the spatial relation of the specific UL transmission is identical to the default spatial relation (the RS in the spatial relation of the specific UL transmission is identical to the RS of the QCL type D in the TCI state of the specific DL channel).

The specific higher layer parameter may be SRS configuration information (SRS-Config), PUCCH configuration information (PUCCH-Config), spatial relation information (for example, spatialRelationInfo, PUCCH-SpatialRelationInfo), reference signal information in the spatial relation information (referenceSignal), a type in the spatial relation information, or the like. The specific parameter may be one of the reference signal information or selections of the type.

The specific parameter may be a parameter (for example, TCI state) indicating that the TCI state of the specific DL channel is used for the spatial relation of the specific UL transmission, may be a parameter (for example, default) indicating that the RS in the spatial relation of the specific UL transmission is in the default spatial relation, may be a parameter (for example, CORESET) indicating that the spatial relation of the specific UL transmission is identical to the TCI state of the CORESET, or may be a parameter (for example, ControlRS) indicating that the RS in the spatial relation of the specific UL transmission is identical to the RS of the QCL type D in the TCI state of the specific DL channel.

For example, in a case of being configured with the CORESET by using the spatial relation information (in a case where the spatial relation information indicates the CORESET or where the spatial relation includes a field of the CORESET), the UE may assume that the RS in the spatial relation of the specific UL transmission is identical to the RS of the QCL type D in the TCI state of the specific DL channel.

In a case of being configured with the specific parameter by using the SRS resource information (SRS-Resource) in the SRS configuration information (SRS-Config), the UE may assume that the RS in the spatial relation of the specific UL transmission is identical to the RS of the QCL type D in the active TCI state of the specific DL channel.

In FR2, in a case where the specific parameter is included in the SRS resource set (or the SRS resources in the SRS resource set) involving, as usage, codebook transmission or noncodebook transmission, the UE may assume that the spatial relation for the SRS resource set (or the SRS resources in the SRS resource set) is identical to the default spatial relation.

In a case where the SRS resource set information (SRS-ResourceSet) in the SRS configuration information (SRS-Config) indicates the use for codebook-based transmission or noncodebook-based transmission (the usage in the SRS resource set information indicates codebook or noncodebook (nonCodebook)) and where the UE is configured with the specific parameter by the SRS resource information (SRS-Resource) (or the spatial relation information (spatialRelationInfo) indicating the SRS resources in the SRS resource set, the UE may assume that the RS in the spatial relation of the PUSCH is identical to the RS of the QCL type D in the active TCI state of the specific DL channel.

In a case of being configured with the specific parameter by the PUCCH configuration information (PUCCH-Config), the UE may assume that the RS in the spatial relation of the PUCCH is identical to the RS of the QCL type D in the active TCI state of the specific DL channel. The specific parameter may be located in an element of the list (spatialRelationInfoToAddModList). The element may be PUCCH spatial relation information (PUCCH-SpatialRelationInfo) used to configure spatial setting for PUCCH transmission.

In a case of being configured with the CORESET by the PUCCH configuration information (PUCCH-Config), the UE may assume that the RS in the spatial relation of the PUCCH is identical to the RS of the QCL type D in the TCI state of the CORESET.

### <<Case 3>>

In a case where a specific RS is not configured in the specific higher layer parameter (the specific RS is not included in the specific higher layer parameter), the UE may assume that the spatial relation of the specific UL transmission is identical to the default spatial relation (the RS in the spatial relation of the specific UL transmission is identical to the RS of the QCL type D in the TCI state of the specific DL channel).

The specific higher layer parameter may be the SRS configuration information (SRS-Config), the spatial relation information (spatialRelationInfo), the PUCCH configuration information (PUCCH-Config), the PUCCH spatial relation information (PUCCH-SpatialRelationInfo) or the like.

The specific RS may be any of the SRS, the SSB, and the CSI-RS. The case where the specific RS is not configured in the specific higher layer parameter may correspond to a case where none of the SRS, the SSB, and the CSI-RS are configured in the specific higher layer parameter.

In a case where the specific RS is not configured in the SRS resource information (SRS-Resource) in the SRS configuration information (SRS-Config), the UE may assume that the RS in the spatial relation of the specific UL transmission is identical to the RS of the QCL type D in the active TCI state of the specific DL channel. The specific RS may be an RS (referenceSignal) in the spatial relation information (spatialRelationInfo).

In FR2, in a case where the specific RS is not included in the SRS resource set (or the SRS resources in the SRS resource set) involving, as usage, codebook transmission or noncodebook transmission, the UE may assume that the spatial relation for the SRS resource set (or the SRS resources in the SRS resource set) is identical to the default spatial relation.

In a case where the SRS resource set information (SRS-ResourceSet) in the SRS configuration information (SRS-Config) indicates the use for codebook-based transmission or noncodebook-based transmission (the usage in the SRS resource set information indicates codebook or noncodebook (nonCodebook)) and where the specific RS is not configured in the SRS resource information (SRS-Resource) indicating the SRS resources in the SRS resource set, the UE may assume that the RS in the spatial relation of the PUSCH is identical to the RS of the QCL type D in the active TCI state of the specific DL channel. The specific RS may be an RS (referenceSignal) in the spatial relation information (spatialRelationInfo) .

In a case where the specific RS is not configured in the PUCCH configuration information (PUCCH-Config), the UE may assume that the RS in the spatial relation of the PUCCH is identical to the RS of the QCL type D in the active TCI state of the specific DL channel. The specific RS may be an RS (referenceSignal) in the PUCCH spatial relation information (PUCCH-SpatialRelationInfo).

In a case where the PUCCH spatial relation information does not include the specific RS and includes information for power control for the PUCCH (for example, pucch-PathlossReferenceRS-Id, p0-PUCCH-Id, closedLoopIndex), the UE can perform power control for the PUCCH, based on the PUCCH spatial relation information.

### <<Case 4>>

In a case where the specific higher layer parameter is not configured, the UE may assume that the spatial relation of the specific UL transmission is identical to the default spatial relation (the RS in the spatial relation of the specific UL transmission is identical to the RS of the QCL type D in the TCI state of the specific DL channel).

The specific higher layer parameter may be a specific RRC information element or may be a higher layer parameter in the spatial relation information (for example, spatialRelationInfo, PUCCH-SpatialRelationInfo).

The SRS parameter (a higher layer parameter (spatialRelationInfo) in the spatial relation information corresponding to the configuration of the spatial relation between the reference RS and the target SRS) may be semi-statically configurable by a higher layer parameter for the SRS resource (SRS-Resource) .

In a case of being configured, the higher layer parameter spatialRelationInfo may include the ID of the reference RS. The reference RS may be an SS/PBCH block, the CSI-RS, or the SRS. With a higher layer parameter for the serving cell ID (servingCellId), the CSI-RS may be configured on the serving cell indicated by the higher layer parameter. The SRS may be configured on the UL BWP indicated by a higher layer parameter for the UL BWP (uplinkBWP), or with a higher layer parameter for the serving cell ID (servingCellId), the SRS may be configured on the serving cell indicated by the higher layer parameter, and otherwise, the SRS may be configured on the serving cell identical to the serving cell of the target SRS.

With the higher layer parameter spatialRelationInfo not configured, the UE may assume that the RS in the spatial relation is identical to the RS of the QCL type D in the active TCI state of the specific DL channel.

With the higher layer parameter spatialRelationInfo not configured, the UE may assume that the RS in the spatial relation is identical to the RS of the QCL type D in the active TCI state of the specific DL channel or the RS of the QCL type D in the TCI state or QCL assumption in a CORESET having the lowest CORESET-ID in the newest slot and associated with the monitored search space.

### <<Case 5>>

In a case where a specific higher layer parameter for a specific type is not configured, the UE may assume that the spatial relation of the specific UL transmission is identical to the default spatial relation (the RS in the spatial relation of the specific UL transmission is identical to the RS of the QCL type D in the TCI state of the specific DL channel). The specific type may be at least one of the P-SRS, the SP-SRS, and the A-SRS, or may be identified by a higher layer parameter of a resource type in the SRS resource information (resourceType).

### <<<P-SRS>>>

A case will be described in which, for the UE configured with one or more SRS resource configurations, the SRS resource information (SRS-Resource) indicates P-SRS (a case where a higher layer parameter for the resource type in the SRS resource information (resourceType) indicates "periodic").

In a case that the UE is configured with a higher layer parameter spatialRelationInfo including the ID of a reference SS/PBCH block (ssb-Index), the UE may transmit a target SRS resource including a spatial domain transmission filter identical to that used to receive the reference SS/PBCH block. In a case that the UE is configured with a higher layer parameter spatialRelationInfo including the ID of a reference CSI-RS (csi-RS -Index), the UE may transmit a target SRS resource including a spatial domain transmission filter identical to that used to receive the reference periodic CSI-RS or the reference semi-persistent CSI-RS. In a case that the UE is configured with a higher layer parameter spatialRelationInfo including the ID of a reference SRS (srs), the UE may transmit a target SRS resource including a spatial domain transmission filter identical to that used to transmit the reference P-SRS.

With the higher layer parameter spatialRelationInfo not configured, the UE may assume that the RS in the spatial relation of the specific UL transmission is identical to the RS of the QCL type D in the active TCI state of the specific DL channel.

With the higher layer parameter spatialRelationInfo not configured, the UE may assume that the RS in the spatial relation of the specific UL transmission is identical to the RS of the QCL type D in the TCI state or QCL assumption in the CORESET having the lowest CORESET-ID in the newest slot and associated with the monitored search space.

### <<<SP-SRS>>>

A case will be described in which for the UE configured with one or more SRS resource configurations, the SRS resource information (SRS-Resource) indicates SP-SRS (a case where the higher layer parameter for the resource type in the SRS resource information (resourceType) indicates "semi-persistent").

In a case where the UE receives an activation command for the SRS resource and where the HARQ-ACK corresponding to the PDSCH carrying a selection command is transmitted in slot n, the corresponding operation and the assumption of the UE on the SRS transmission corresponding to the configured SRS resource set may start to be applied in slot n+3N+1 (N is the number of slots in a subframe). The activation command may include a spatial relation assumption provided by a list of references each to one reference signal ID for each element of the SRS resource set activated. Each of the IDs in the list may reference a reference SS/PBCH block, a reference NZP CSI-RS resource, or a reference SRS resource. The reference NZP CSI-RS resource may be an NZP CSI-RS resource configured on the serving cell indicated by the resource serving cell ID field in a case where the resource serving cell ID field is present in the activation command or may be an NZP CSI-RS resource otherwise configured on the serving cell identical to that for the SRS resource set. The reference SRS resource may be an SRS resource configured on the serving cell and the UL BWP indicated by a resource serving cell ID and a resource BWP ID in a case where the resource serving cell ID and the resource BWP ID are present in the activation command, or may be an SRS resource otherwise configured on the serving cell and the BWP identical to those for the SRS resource set.

In a case that the UE is configured with a higher layer parameter spatialRelationInfo including the ID of a reference SS/PBCH block (ssb-Index), the UE may transmit a target SRS resource including a spatial domain transmission filter identical to that used to receive the reference SS/PBCH block. In a case that the UE is configured with a higher layer parameter spatialRelationInfo including the ID of a reference CSI-RS (csi-RS -Index), the UE may transmit a target SRS resource including a spatial domain transmission filter used to receive the reference periodic CSI-RS or the reference semi-persistent CSI-RS. In a case that the UE is configured with the higher layer parameter spatialRelationInfo including the ID of the reference SRS (srs), the UE may transmit a target SRS resource including a spatial domain transmission filter identical to that used to transmit the reference SP-SRS or the reference SP-SRS.

In a case where the UE is configured with none of the higher layer parameters spatialRelationInfo or none of the higher layer parameters spatialRelationInfo are activated, the UE may assume that the RS in the spatial relation of the specific UL transmission is identical to the RS of the QCL type D in the active TCI state of the specific DL channel.

In a case where the UE is configured with none of the higher layer parameters spatialRelationInfo or none of the higher layer parameters spatialRelationInfo are activated, the UE may assume that the RS in the spatial relation of the specific UL transmission is identical to the RS of the QCL type D in the TCI state or QCL assumption in the CORESET having the lowest CORESET-ID in the newest slot and associated with the monitored search space.

### <<<A-SRS>>>

A case will be described in which for the UE configured with one or more SRS resource configurations, the SRS resource information (SRS-Resource) indicates A-SRS (a case where the higher layer parameter for the resource type in the SRS resource information (resourceType) indicates "aperiodic").

In a case that the UE is configured with a higher layer parameter spatialRelationInfo including the ID of a reference SS/PBCH block (ssb-Index), the UE may transmit a target SRS resource including a spatial domain transmission filter identical to that used to receive the reference SS/PBCH block. In a case that the UE is configured with the higher layer parameter spatialRelationInfo including the ID of the reference CSI-RS (csi-RS -Index), the UE may transmit a target SRS resource including a spatial domain transmission filter used to receive the reference periodic CSI-RS, the reference semi-persistent SP-CSI-RS, or the newest reference aperiodic CSI-RS. In a case that the UE is configured with the higher layer parameter spatialRelationInfo including the ID of the reference SRS (srs), the UE may transmit a target SRS resource including a spatial domain transmission filter identical to that used to transmit the reference P-SRS, the reference SP-SRS, or the reference A-SRS.

With the higher layer parameter spatialRelationInfo not configured, the UE may assume that the RS in the spatial relation of the specific UL transmission is identical to the RS of the QCL type D in the active TCI state of the specific DL channel.

With the higher layer parameter spatialRelationInfo not configured, the UE may assume that the RS in the spatial relation of the specific UL transmission is identical to the RS of the QCL type D in the TCI state or QCL assumption in the CORESET having the lowest CORESET-ID in the newest slot and associated with the monitored search space.

With the higher layer parameter spatialRelationInfo not configured, the UE may assume that the RS in the spatial relation of the specific UL transmission is identical to the RS of the QCL type D in the TCI state or QCL assumption of the PDCCH triggering the A-SPS.

According to Embodiment 1 described above, in a case where the active TCI state of the specific DL channel is updated by the MAC CE or the DCI, the spatial relation of the specific UL transmission can be updated. This eliminates the need for RRC reconfiguration and enables the spatial relation of the specific UL transmission to be quickly controlled, allowing communication properties of the specific UL transmission to be improved. The base station need not configure or activate the spatial relation information, enabling avoidance of the overhead of signaling and interruption of communication for the spatial relation.

For UE capability information, studies have been conducted about the maximum number of total of active spatial relations being at least 1, the active spatial relations corresponding to (aperiodic NZP CSI-RS) unique DL-RS, an SRS with no spatial relation configuration, and a TCI state available for DCI triggering of the aperiodic NZP CSI-RS to indicate the spatial domain transmission filter for the PUCCH and the SRS for the PUSCH for each CC and for each BWP. Furthermore, studies have been conducted about support of one additional active spatial relation for the PUCCH in a case where the maximum number of the active spatial relations is 1. According to Embodiment 1, the sum of the active spatial relations can be kept at 1, allowing the UE to operate in accordance with this UE capability information.

### <Embodiment 2>

The UE may assume that the spatial relation of the PUSCH scheduled by DCI format 0_0 is identical to the default spatial relation or the spatial relation of the reference UL transmission in Embodiment 1.

DCI format 0_0 may be interpreted as DCI including no SRI or carrier indicator field (CIF) for scheduling of the PUSCH.

### <<Spatial Relation Determination Method>>

The UE may transmit the PUSCH scheduled by DCI format 0_0, in accordance with one of spatial relation determination methods 1-1 to 1-8 described below.

Unavailability of the spatial relation of the PUCCH resource with the lowest ID within the active UL BWP of the cell may be interpreted as non-configuration of the PUCCH resource in the active UL BWP of the cell.

Unavailability of the spatial relation of the PUCCH resource group with the lowest ID within the active UL BWP of the cell may be interpreted as non-configuration of the PUCCH resource in the active UL BWP of the cell.

### <<Spatial Relation Determination Method 1-1>>

The UE may transmit the PUSCH scheduled by DCI format 0_0, in accordance with the default spatial relation.

### <<Spatial Relation Determination Method 1-2>>

In a case where the spatial relation of the PUCCH resource with the lowest ID within the active UL BWP of the cell is available, the UE may transmit the PUSCH on the cell scheduled by DCI format 0_0, in accordance with the spatial relation.

In a case where the spatial relation of the PUCCH resource with the lowest ID within the active UL BWP of the cell is unavailable, the UE may transmit the PUSCH on the cell scheduled by DCI format 0_0, in accordance with the default spatial relation.

### <<Spatial Relation Determination Method 1-3>>

In a case where the spatial relation of the PUCCH resource group with the lowest ID within the active UL BWP of the cell is available, the UE may transmit the PUSCH on the cell scheduled by DCI format 0_0, in accordance with the spatial relation.

In a case where the spatial relation of the PUCCH resource group with the lowest ID within the active UL BWP of the cell is unavailable, the UE may transmit the PUSCH on the cell scheduled by DCI format 0_0, in accordance with the default spatial relation.

### <<Spatial Relation Determination Method 1-4>>

The UE may transmit the PUSCH scheduled by DCI format 0_0, in accordance with the spatial relation of the reference UL transmission.

### <<Spatial Relation Determination Method 1-5>>

In a case where the spatial relation of the PUCCH resource with the lowest ID within the active UL BWP of the cell is available, the UE may transmit the PUSCH on the cell scheduled by DCI format 0_0, in accordance with the spatial relation.

In a case where the spatial relation of the PUCCH resource with the lowest ID within the active UL BWP of the cell is unavailable, the UE may transmit the PUSCH on the cell scheduled by DCI format 0_0, in accordance with the spatial relation of the reference UL transmission.

<<Spatial Relation Determination Method 1-6>>

In a case where the spatial relation of the PUCCH resource group with the lowest ID within the active UL BWP of the cell is available, the UE may transmit the PUSCH on the cell scheduled by DCI format 0_0, in accordance with the spatial relation.

In a case where the spatial relation of the PUCCH resource group with the lowest ID within the active UL BWP of the cell is unavailable, the UE may transmit the PUSCH on the cell scheduled by DCI format 0_0, in accordance with the spatial relation of the reference UL transmission.

### <<Spatial Relation Determination Method 1-7>>

In a case where the spatial relation of the PUCCH resource with the lowest ID within the active UL BWP of the cell is available, the UE may transmit the PUSCH on the cell scheduled by DCI format 0_0, in accordance with the spatial relation.

### <<Spatial Relation Determination Method 1-8>>

In a case where the spatial relation of the PUCCH resource group with the lowest ID within the active UL BWP of the cell is available, the UE may transmit the PUSCH on the cell scheduled by DCI format 0_0, in accordance with the spatial relation.

### <<UE Capability>>

The UE supporting the default spatial relation may transmit the PUSCH on a cell scheduled by DCI format 0_0, in accordance with one of spatial relation determination methods 1-1 to 1-8.

The UE having reported support of the default spatial relation may transmit the PUSCH on the cell scheduled by DCI format 0_0, in accordance with one of spatial relation determination methods 1-1 to 1-3.

The UE configured with one of spatial relation determination methods 1-1 to 1-3 may transmit the PUSCH on the cell scheduled by DCI format 0_0, in accordance with the spatial relation determination method.

The UE not reporting support of the default spatial relation may transmit the PUSCH on the cell scheduled by DCI format 0_0, in accordance with one of spatial relation determination methods 1-4 to 1-8.

The UE configured with none of spatial relation determination methods 1-1 to 1-3 may transmit the PUSCH on the cell scheduled by DCI format 0_0, in accordance with one of spatial relation determination methods 1-4 to 1-8.

According to Embodiment 2, even in a cell not configured with the PUCCH resource or the PUCCH resource group, the UE can appropriately transmit the PUSCH scheduled by DCI format 0_0. The NW can determine the beam used to receive the PUSCH, allowing PUSCH reception performance to be improved.

### <Embodiment 3>

The UE may assume that the spatial relation of the PUSCH scheduled by DCI format 0_1 is identical to the default spatial relation or the spatial relation of the reference UL transmission in Embodiment 1.

DCI format 0_1 may be interpreted as DCI including at least one of the SRI or the CIF for scheduling of the PUSCH.

### <<Spatial Relation Determination Method>>

The UE may transmit the PUSCH scheduled by DCI format 0_1, in accordance with one of spatial relation determination methods 2-1 to 2-3 described below.

### <<Spatial Relation Determination Method 2-1>>

The UE may transmit the PUSCH scheduled by DCI format 0_1, in accordance with the default spatial relation.

### <<Spatial Relation Determination Method 2-2>>

The UE may transmit the PUSCH scheduled by DCI format 0_1, in accordance with the spatial relation of the reference UL transmission.

### <<Spatial Relation Determination Method 2-3>>

The UE may transmit the PUSCH scheduled by DCI format 0_1, in accordance with the spatial relation of the SRS resource indicated in the SRI in DCI format 0_1 described above.

### <<UE Capability>>

The UE supporting the default spatial relation may transmit the PUSCH on the cell scheduled by DCI format 0_1, in accordance with one of spatial relation determination methods 2-1 to 2-3.

The UE having reported support of the default spatial relation may transmit the PUSCH on the cell scheduled by DCI format 0_1, in accordance with spatial relation determination method 2-1.

The UE configured with one of spatial relation determination methods 2-1 to 2-3 may transmit the PUSCH on the cell scheduled by DCI format 0_0, in accordance with the spatial relation determination method.

The UE not reporting support of the default spatial relation may transmit the PUSCH on the cell scheduled by DCI format 0_0, in accordance with one of spatial relation determination methods 2-2 and 2-3.

The UE not configured with spatial relation determination method 2-1 may transmit the PUSCH on the cell scheduled by DCI format 0_0, in accordance with one of spatial relation determination methods 2-2 and 2-3.

According to Embodiment 3 described above, in a case where the UE determines the spatial relation of the PUSCH without using the SRI, DCI format 0_1 need not include the SRI, enabling a reduction in the size of the DCI.

### <Embodiment 4>

In at least one of Embodiment 2 and Embodiment 3, the UE may determine the spatial relation determination method, based on the higher layer signaling (for example, RRC signaling).

The UE may be configured (indicated) with the spatial relation determination method, based on at least one of configuration methods 1 to 4 described below.

### <<Configuration Method 1>>

By being notified for the UE of a specific parameter (for example, the specific parameter in case 2 described above) indicating the use of QCL of the specific DL channel for the spatial relation of the PUSCH, any of spatial relation determination methods 1-1 to 1-3 may be configured.

### <<Configuration Method 2>>

With the SRS resource indicated in the SRI not configured (not present), any of spatial relation determination methods 2-1 to 2-3 may be indicated to the UE. For example, with the SRS resource set information (SRS-ResourceSet) absent that indicates that the SRS resource set is used for codebook-based transmission or noncodebook-based transmission (the usage in the SRS resource set indicates codebook or noncodebook (nonCodebook)), any of spatial relation determination methods 2-1 to 2-3 may be indicated to the UE.

### <<Configuration Method 3>>

With the SRS resource that is indicated in the SRI indicating the use of the default spatial relation (for example, the TCI state or QCL assumption of the DL channel) for the spatial relation of the PUSCH, any of spatial relation determination methods 2-1 to 2-3 may be indicated to the UE.

In a case where the SRS resource indicated in the SRI includes a specific parameter (for example, the specific parameter in case 2 described above) indicating the use of QCL of the default spatial relation for the spatial relation of the PUSCH, any of spatial relation determination methods 2-1 to 2-3 may be indicated to the UE. For example, in a case where the SRS resource indicated in the SRI includes no enabled SRS resource (the SRS resource is blank), any of spatial relation determination methods 2-1 to 2-3 may be indicated to the UE.

### <<Configuration Method 4>>

With the SRS resource that is indicated in the SRI including no spatial relation information (spatial relation info), any of spatial relation determination methods 2-1 to 2-3 may be indicated to the UE.

According to Embodiment 4 described above, the use of the default spatial relation for the PUSCH can be flexibly configured.

### <Embodiment 5>

In a case where the UE uses the default spatial relation, the size of the SRI field in DCI format 0_1 may be 0 bits. In a case where the UE uses the default spatial relation for the PUSCH transmission, the size of the SRI field is 0 bits, and the UE may receive DCI format 0_1 scheduling the PUSCH.

In a case where the UE uses the default spatial relation, the number N_{SRS} of SRS resources may be 1, the SRS resources being configured in the SRS resource set associated with the higher layer parameter (usage) indicating, as usage, the value of the codebook or the value of the noncodebook. In this case, the size of the SRI field in DCI format 0_1 may be 0 bits (DCI format 0_1 need not include the SRI field).

In a case where the UE determines to use the default spatial relation in accordance with any of Embodiments 1 to 4 and usage included in the SRS resource set is codebook or nonCodebook, the size of the SRI field in DCI format 0_1 may be 0 bits (DCI format 0_1 need not include the SRI field) regardless of the number of SRS resources in the SRS resource set.

According to Embodiment 5 described above, in a case where the UE determines the spatial relation of the PUSCH without using the SRI, DCI format 0_1 need not include the SRI, enabling a reduction in the size of the DCI.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

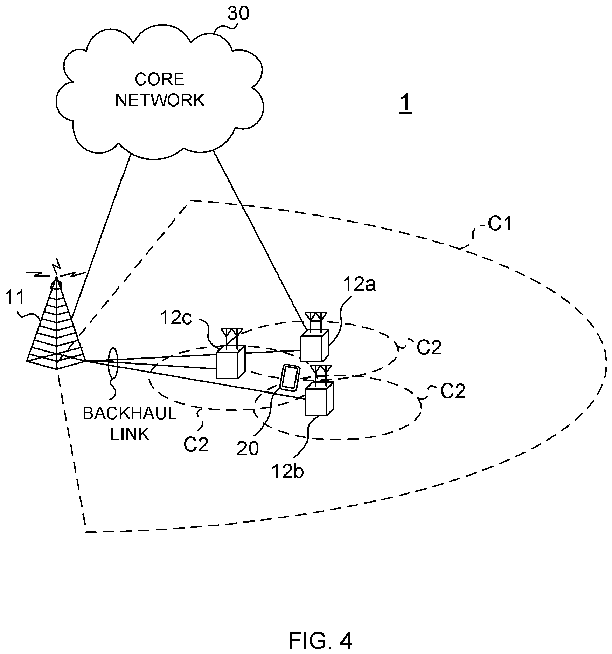

FIG. 4 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

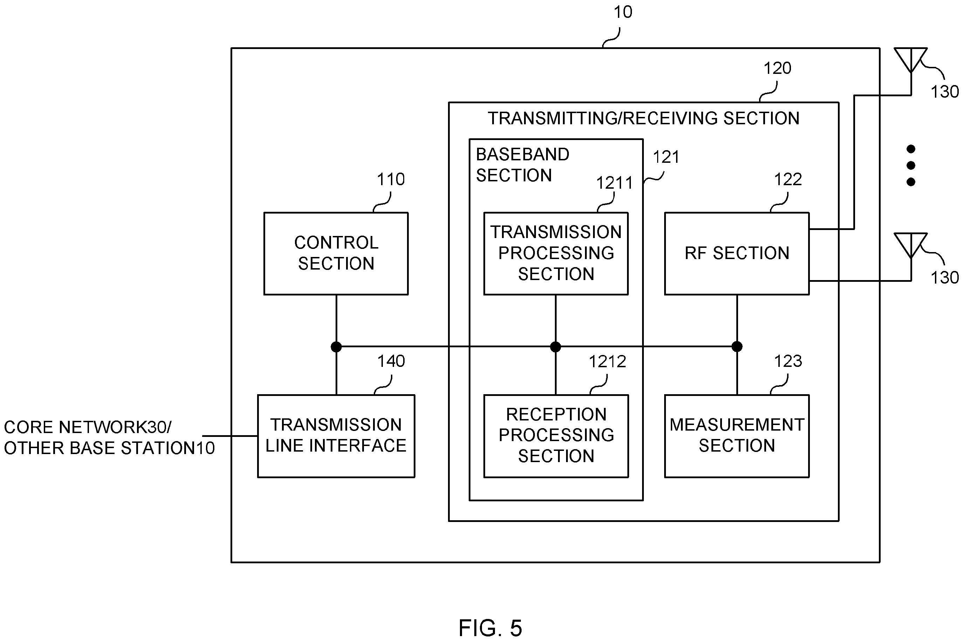

FIG. 5 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit the reference signal (for example, the SSB, the CSI-RS, or the like). The transmitting/receiving section 120 may transmit information (MAC CE or DCI) indicating the TCI state for the specific DL channel. The TCI state may indicate at least one of the reference signal (for example, the SSB, the CSI-RS, or the like), the QCL type, and the cell transmitting the reference signal. The TCI state may indicate one or more reference signals. The one or more reference signals may include the reference signal of the QCL type A or may include the reference signal of the QCL type D.

The control section 110 may assume that the first reference signal in the spatial relation of the specific uplink transmission (for example, the SRS, the PUCCH, the PUSCH, or the like) is the second reference signal (for example, the SSB, the CSI-RS) of the QCL type D in the transmission control indication (TCI) state or quasi-co-location (QCL) of the specific downlink channel (for example, the PDCCH, the PDSCH, or the like).

### (User Terminal)

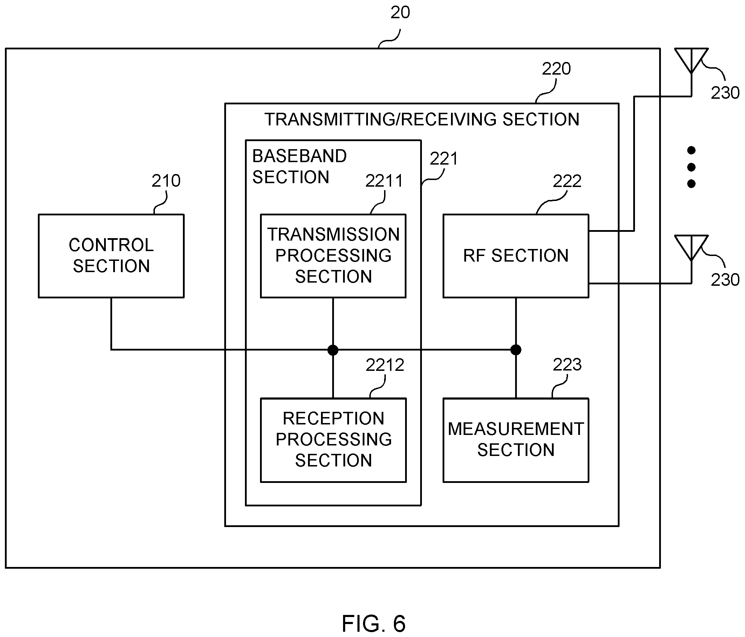

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive the reference signal (for example, the SSB, the CSI-RS, or the like) .

The control section 210 may use, for a spatial relation of specific uplink transmission, a reference signal related to quasi-co-location (QCL) (for example, a default spatial relation) of specific downlink transmission (for example, a specific DL transmission) or a spatial relation of uplink transmission (for example, reference UL transmission) satisfying a certain condition, based on at least one of a downlink control information (DCI) format for scheduling the specific uplink transmission (for example, specific UL transmission) and reported capability information. The transmitting/receiving section 220 may perform the uplink transmission in accordance with the spatial relation of the specific uplink transmission.

The specific uplink transmission may be an uplink shared channel scheduled by DCI format 0_0.

The specific uplink transmission may be an uplink shared channel scheduled by DCI format 0_1.

The uplink transmission satisfying the certain condition may be newest uplink transmission of a specific type.

The transmitting/receiving section 220 may report capability information indicating at least one of a type of the specific uplink transmission and a type of the downlink transmission. In a case of not being configured with spatial relation information of the specific uplink transmission at a specific frequency (for example, FR2) (for example, at least one of cases 1 to 5), the control section 210 may use the reference signal for the spatial relation of the specific uplink transmission.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

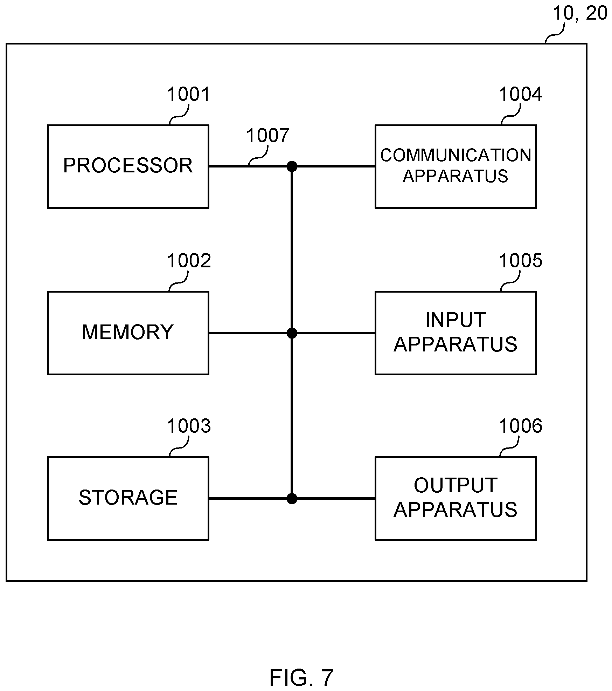

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-toterminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a control section that uses, for a spatial relation of specific uplink transmission, a reference signal related to quasi-co-location (QCL) of specific downlink transmission or a spatial relation of uplink transmission satisfying a certain condition, based on at least one of a downlink control information (DCI) format for scheduling the specific uplink transmission and reported capability information; and
a transmitting section that performs the uplink transmission in accordance with the spatial relation of the specific uplink transmission.

2. The user terminal according to claim 1, wherein
the specific uplink transmission is an uplink shared channel scheduled by DCI format 0_0.

3. The user terminal according to claim 1 or 2, wherein
the specific uplink transmission is an uplink shared channel scheduled by DCI format 0_1.

4. The user terminal according to claim 1 or 3, wherein
the uplink transmission satisfying the certain condition is newest uplink transmission of a specific type.

5. The user terminal according to any one of claims 1 to 4, wherein
transmitting section reports capability information indicating at least one of a type of the specific uplink transmission and a type of the specific downlink transmission, and
in a case of not being configured with spatial relation information of the specific uplink transmission at a specific frequency, the control section uses the reference signal for the spatial relation of the specific uplink transmission.

6. A radio communication method for a user terminal, the radio communication method comprising:
using, for a spatial relation of specific uplink transmission, a reference signal related to quasi-co-location (QCL) of specific downlink transmission or a spatial relation of uplink transmission satisfying a certain condition, based on at least one of a downlink control information (DCI) format for scheduling the specific uplink transmission and reported capability information; and
performing the uplink transmission in accordance with the spatial relation of the specific uplink transmission.
